# EUROPÄISCHE PATENTSCHRIFT

(11) **EP 0 745 835 B1**
(45) Veröffentlichungstag und Bekanntmachung des Hinweises auf die Patenterteilung: **08.09.1999**
(21) Anmeldenummer: 96890091.0
(22) Anmeldetag: 29.05.1996
(51) Int. Cl.: G01L 19/04, G01L 19/06, G01L 23/10

(54) **Ungekühlter Drucksensor mit Wärmeleitelement**
Pressure sensor without cooling and heat conducting element
Palpeur de pression non refroidi avec un conducteur de la chaleur

(30) Priorität: 02.06.1995 AT 95095
(43) Veröffentlichungstag der Anmeldung: 04.12.1996
(73) Patentinhaber: AVL List GmbH, 8020 Graz (AT)
(72) Erfinder: Glaser, Josef, Dr., 8047 Graz (AT); Fornet, Pierre, 8430 Leibnitz (AT)
(74) Vertreter: Krause, Walter, Dr. Dipl.-Ing.

(56) Entgegenhaltungen:
- EP-A- 0 032 433
- DE-A- 1 648 602
- DE-A- 3 006 474
- GB-A- 1 385 365
- US-A- 3 857 287
- US-A- 4 399 706
- PATENT ABSTRACTS OF JAPAN vol. 017, no. 563 (P-1628), 12.Oktober 1993 & JP 05 164643 A (MATSUSHITA ELECTRIC IND CO LTD), 29.Juni 1993,
- PATENT ABSTRACTS OF JAPAN vol. 016, no. 402 (P-1409), 25.August 1992 & JP 04 132923 A (MITSUBISHI ELECTRIC CORP), 7.Mai 1992,
- PATENT ABSTRACTS OF JAPAN vol. 010, no. 173 (P-469), 18.Juni 1986 & JP 61 023933 A (MEIYOU DENKI KK), 1.Februar 1986,
- PATENT ABSTRACTS OF JAPAN vol. 012, no. 062 (P-670), 25.Februar 1988 & JP 62 204137 A (NIPPON DENSO CO LTD), 8.September 1987,

## Beschreibung

Die Erfindung betrifft einen Drucksensor mit einem Gehäuse und darin enthaltener, durch einen Radialspalt vom Gehäuse getrennter Meßvorrichtung bestehend aus Druckübertragungselement, Meßelement und ggf. Rohrfeder für die axiale Vorspannung des Meßelementes, sowie mit einer Dichtmembran, die mediumseitig Gehäuse und Druckübertragungselement dicht und biegeweich verbindet (US-A-4 399 706).

Sensoren für die Druckmessungen in heißen Prozessen, die direkt vom Meßmedium berührt sind, erhalten große Wärmemengen aus dem Meßmedium zugeführt. Enthält ein Sensor kein eigenes Kühlsystem, das den Sensor durchströmt und Wärme fast unmittelbar an der Wärmezufuhrstelle abführt, dann muß diese gesamte Wärmemenge durch den Sensor in die ebenfalls schon heiße Wand abfließen, sodaß in einzelnen Sensorteilen, insbesondere nahe dem heißen Medium, sehr hohe Temperaturen entstehen können.

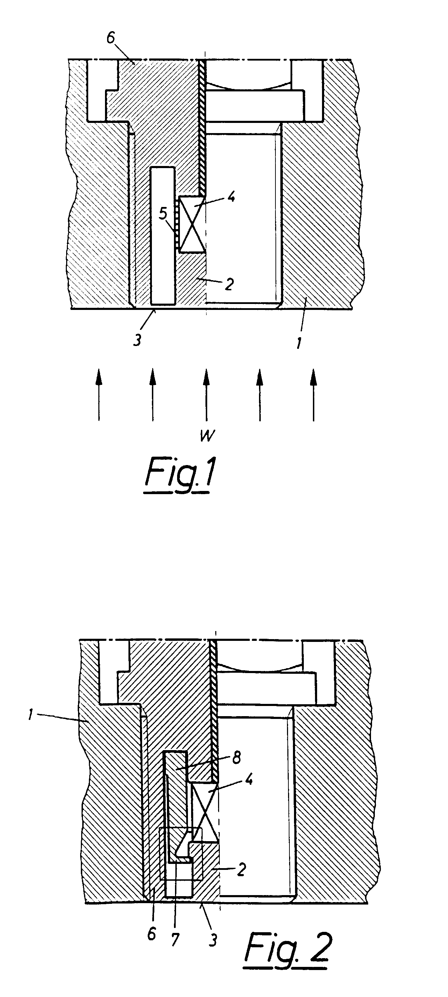

Die Fig. 1, welche den üblichen Aufbau eines derartigen Sensors darstellt, zeigt deutlich die Probleme der Wärmeabfuhr. Vom Meßmedium her in den Sensor einströmende Wärme W muß in die Einschraubstelle 1 in der Wandung des Druckraumes abfließen. Die Teilmengen, die im Zentrum des Sensors über das Druckübertragungselement 2 und die inneren Zonen der Membrane 3 einfließen, haben dabei einen relativ hohen Wärmeflußwiderstand zu überwinden, der sich auf den möglichen Wärmeableitwegen einerseits durch die dünne Membrane 3 und andererseits durch das ebenfalls meist schlecht wärmeleitende Meßelement 4 ergibt. Das Druckübertragungselement 2 ist daher in ungekühlten Sensoren meist das heißeste Teil. Über Membrane 3 und Meßelement 4 entstehen große Temperaturabfälle zu den angrenzenden Bereichen des Gehäuses 6.

Beide Elemente - Membran 3 und Meßelement 4 - sind von ihrer Funktion her schlecht als wärmeleitende Elemente gestaltbar - die Membran muß als sehr weiches und dünnes (um Relativbewegung zwischen Stapel und Gehäuse zu ermöglichen), aber festes (hoher Druck erfordert hochfestes Material), chemisch beständiges (bei aggressiven Medien) und reibungsfreies Dichtelement wirken. Das Meßelement hat in erster Linie für perfekte Umsetzung von Druck bzw. Kraft in ein elektrisches Signal zu sorgen, wobei hohe Wärmeströme bzw. Temperaturen jedenfalls störend wirken, selbst wenn es diesen widerstehen kann, da die Meßeigenschaften stets temperaturabhängig sind. Bei beiden Elementen bedingt eine Konstruktion, die auf hohe Wärmeströme in diesen Elementen Rücksicht nimmt, eine Verschlechterung der optimalen Funktion und damit der Meßgenauigkeit.

Ein weiteres Element, das häufig in piezoelektrischen Sensoren verwendet wird, ist die Vorspannfeder 5, die für das sichere Aufeinanderpressen der Piezoelemente sorgt. Die Vorspannfeder muß möglichst massearm, elastisch und wämedehnungsangepaßt als dünner Zylinder (Rohrfeder) ausgeführt sein, der ein rein auf Zug beanspruchtes Bauteil darstellt. Auch dieses Bauteil weist sehr geringe Wärmeleitfähigkeit auf und auch hier kann die nötige Verbesserung durch naheliegende Maßnahmen, wie Vergrößerung des Bauteilquerschnitts oder anderes Material, nur durch Veschlechterung anderer Sensoreigenschaften, wie größere Meßelement-Verspannungen bei Beheizung des Sensors, erkauft werden.

Aufgabe der Erfindung ist es, einen Drucksensor ohne externes Kühlsystem der eingangs genannten Art derart zu verbessern, daß die vom Druckübertragungselement in das Meßelement einströmende Wärmemenge möglichst gering gehalten werden kann.

Diese Aufgabe wird erfindungsgemäß dadurch gelöst, daß zwischen Druckübertragungselement und Gehäuse zumindest ein aus gut wärmeleitendem Material gefertigtes und einen großen Wärmeleitquerschnitt aufweisendes Wärmeleitelement angeordnet ist, sodaß die im Bereich des Druckübertragungselementes anfallende Wärmemenge großteils über das Wärmeleitelement an das Gehäuse ableitbar ist, wobei das Wärmeleitelement bei Axialverschiebungen zwischen Druckübertragungselement und Gehäuse als Biege- oder Rollelement wirkt, welches in axialer Richtung im Hinblick auf die Kraftübertragung weich ausgebildet ist. Da das Wärmeleitelement im wesentlichen lediglich für guten Wärmetransport zu sorgen hat, kann es für diese Aufgabe optimiert werden, also vor allem aus einem Material mit sehr hoher Wärmeleitfähigkeit ausgeführt sein.

Kupferwerkstoffe haben z.B. den 10- bis 20-fachen Wärmeleitwert überlicher Werkstoffe für Membranen oder Rohrfedern, sind aber wegen relativ geringer Festigkeit und Korrosionsbeständigkeit sowie sehr großer Wärmedehnung schlecht für Membrane oder Rohrfeder geeignet.

Zusätzliche Wärmeableitelemente müssen nur noch auf die Tatsache Rücksicht nehmen, daß zwischen Gehäuse und Meßelementstapel Relativbewegungen durch Wärmedehnungen und Verformungen der Montagestelle auftreten, die möglichst kraftfrei zuzulassen sind - Wärmeableitelemente müssen also hinsichtlich der Bewegungen "weich" sein. Diese Funktion ist auch mit Werkstoffen ohne große Festigkeit, Korrosionsbeständigkeit oder angepaßte Wärmedehnung möglich, es kann erfindungsgemäß durch Elemente realisiert werden, die bei Relativbewegung zwischen Gehäuse und Druckübertragungselement, also vor allem in Richtung der Sensorachse im wesentlichen auf Biegung beansprucht werden oder sogar nur zwischen Gehäuse und Druckübertragungselement rollen, jedenfalls aber nicht ausschließlich zug- oder druckbeansprucht sind, wie die Rohrfeder.

Im folgenden wird die Erfindung anhand von Zeichnungen näher erläutert.

Es zeigen:
- Fig. 1: einen Sensor gemäß Stand der Technik, wie bereits eingangs beschrieben,
- Fig. 2: einen erfindungsgemäßen Sensor mit Ausführungsvarianten Fig. 2A bis Fig. 2F, Draufsichten auf Varianten des Wärmeleitelementes Fig. 2C*, 2E*, 2F* und
- Fig. 3: eine weitere Ausführungsvariante mit einem Detail gemäß Fig. 3a.

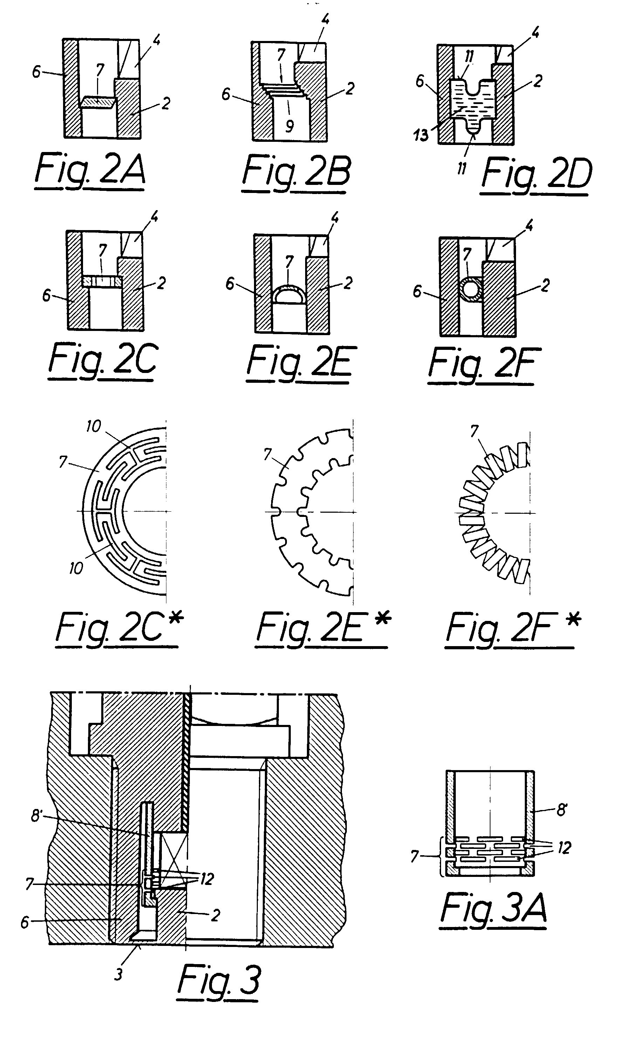

In Fig. 2 weist das in Axialrichtung weiche Wärmeleitelement 7 ein zusätzliches ggf. einstückig angeformtes, steifes Wärmeleitelement 8 auf, welches die abgeführte Wärme in kühlere Bereiche des Gehäuses 6 des Sensor übernimmt.

Biegeelemente als Wärmeleitelemente erlauben die Reduktion der Steifigkeit bis nahe null durch Aufteilung ihrer Gesamtdicke, die sich aus dem nötigen Wärmeleitquerschnitt ergibt, auf immer mehr, immer dünner werdende folienartige Elemente 9 (Fig. 2B).

Fig. 2A bis 2F zeigen eine Reihe derartiger Elemente wie einfache Scheiben (Fig. 2A), mehrere dünne Scheibchen mit separaten Auflagern (Fig. 2B), sowie gegliederte Durchbrechungen 10 aufweisende, auch in radialer Richtung weiche Scheiben (Fig. 2C samt Draufsicht Fig. 2C*). Besonders gute Wärmeleitung bei sehr guter Weichheit wird erreicht, wenn in den Hohlraum 13 zwischen zwei das Druckübertragungselement 2 und das Gehäuse 6 dicht verbindende Membranen 11 eine wärmeleitende Flüssigkeit eingeschlossen ist (Fig. 2D).

Schließlich zeigen die Varianten nach Fig. 2E und Fig. 2F samt Draufsichten Fig. 2E* und Fig. 2F* "rollende" Elemente, vorzugsweise eine Spirale gemäß Fig. 2F.

Bei all diesen Varianten kann die Wärme direkt in den dem Druckübertragungselement radial gegenüberliegenden Bereich des Gehäuses 6 geleitet werden, aber auch durch Anordnung eines ebenfalls gut wärmeleitenden, sonst unkritischen z.B. sehr steifen zylindrischen Teiles 8 in Bereiche des Sensorgehäuses transportiert werden, die vom beheizten Teil weiter entfernt, also kühler sind.

Das in Axialrichtung weiche Wärmeleitelement 7 kann gemäß Fig. 3 um einen ebenfalls gut wärmeleitenden Teil 8' erweitert sein, wie z.B. einem einfachen dickwandigen Zylinder, in dem durch Anbringen von Schlitzen 12 ein Element gebildet wird, das sowohl weiche Bereiche für die geringe Verspannung des Wärmeleitelementes enthält, als auch einen steifen Zylinder 8' für die Weiterleitung der Wärme in kühlere Sensorbereiche.

In Sensoren mit vorgespannten Meßelementen, z.B. Piezokristallen, wird das weiche Wärmeableitelement vorteilhafterweise so geformt, daß es im eingebauten Zustand zumindest einen Teil dieser Vorspannkräfte erzeugt. Dies ist z.B. bei den scheibenförmigen Elementen nach Fig. 2A, 2B und 2C ohne Beeinträchtigung ihrer Funktion dadurch möglich, daß diese Elemente zunächst in Kegelform als Tellerfeder gefertigt werden und beim Zusammenbau in den ebenen Zustand gepreßt werden.

## Patentansprüche

1. Drucksensor mit einem Gehäuse (6) und darin enthaltener, durch einen Radialspalt vom Gehäuse getrennter Meßvorrichtung bestehend aus Druckübertragungselement (2), Meßelement (4) und ggf. Rohrfeder für die axiale Vorspannung des Meßelementes, sowie mit einer Dichtmembran (3), die mediumseitig Gehäuse und Druckübertragungselement dicht und biegeweich verbindet, **dadurch gekennzeichnet,** daß zwischen Druckübertragungselement (2) und Gehäuse (6) zumindest ein aus gut wärmeleitendem Material gefertigtes und einen großen Wärmeleitquerschnitt aufweisendes Wärmeleitelement (7) angeordnet ist, sodaß die im Bereich des Druckübertragungselementes (2) anfallende Wärmemenge großteils über das Wärmeleitelement (7) an das Gehäuse (6) ableitbar ist, wobei das Wärmeleitelement (7) bei Axialverschiebungen zwischen Druckübertragungselement (2) und Gehäuse (6) als Biege-oder Rollelement wirkt, welches in axialer Richtung im Hinblick auf die Kraftübertragung weich ausgebildet ist.

2. Drucksensor nach Anspruch 1, **dadurch gekennzeichnet,** daß zusätzlich zu dem in Axialrichtung weichen Wärmeleitelement (7) ein weiteres vorzugsweise einfaches, steifes Wärmeleitelement (8) vorgesehen ist, das die Wärmeleitung in vom Druckübertragungselement (2) weiter entfernte, kühlere Bereiche des Gehäuses (6) übernimmt.

3. Drucksensor nach Anspruch 1, **dadurch gekennzeichnet,** daß das in Axialrichtung weiche Wärmeleitelement (7) um ein steifes ebenfalls gut wärmeleitendes Teil (8') erweitert ist, das die Wärmeleitung in vom Druckübertragungselement (2) weiter entfernte, kühlere Bereiche des Gehäuses übernimmt.

4. Drucksensor nach Anspruch 1 oder 2, **dadurch gekennzeichnet,** daß das Wärmeleitelement (7) so gestaltet ist, daß es beim Einbau verformbar ist, wobei die entstehenden Verformungskräfte die notwendigen Vorspannkräfte für das Meßelement (4) zumindest zum Teil erzeugen.

5. Drucksensor nach Anspruch 1, **dadurch gekennzeichnet,** daß das Wärmeleitelement (7) aus zwei zwischen dem Druckübertragungselement (2) und dem Gehäuse (6) angeordneten Membranen (11) besteht, welche einen geschlossenen Hohlraum (13) bilden, der mit einer wärmeleitenden Flüssigkeit gefüllt ist.

## Claims

1. Pressure sensor with a housing (6) containing a measuring device which is separated from the housing by a radial gap and comprises a pressure transmitting element (2), a measuring element (4), and, if required, a tubular spring for axially preloading the measuring element, and with a sealing membrane (3) tightly and flexibly connecting housing and pressure transmitting element on the side of the medium, **characterized** in that at least one heat conducting element (7) is provided between the pressure transmitting element (2) and the housing (6), which element (7) is made from material of good thermal conductivity and has a large cross-section for heat conduction, such that most of the heat arising in the region of the pressure transmitting element (2) is carried off to the housing (6) via the heat conducting element (7), the latter acting as bending or rolling element in the instance of axial shifts between the pressure transmitting element (2) and the housing (6), and being flexible in axial direction as regards force transmission.

2. Pressure sensor according to claim 1, **characterized** in that the heat conducting element (7), which is flexible in axial direction, is provided with an additional, rigid heat conducting element (8), which serves to transfer heat to regions of the housing (6) that are located at some distance from the pressure transmitting element (2) and are therefore cooler.

3. Pressure sensor according to claim 1, **characterized** in that the heat conducting element (7), which is flexible in axial direction, is enlarged by a rigid part (8') of generally good heat conducting properties, which serves to transfer heat to regions of the housing (6) that are located at some distance from the pressure transmitting element (2) and are therefore cooler.

4. Pressure sensor according to claim 1 or 2, **characterized** in that the heat conducting element (7) is deformable on assembly in axial direction, the deformation forces generated thereby at least partly applying a preloading force on the measuring element (4).

5. Pressure sensor according to claim 1, **characterized** in that the heat conducting element (7) consists of two membranes (11) placed between the pressure transmitting element (2) and the housing (6), which form a closed hollow space (13) containing a heat conducting fluid.

## Revendications

1. Capteur de pression comportant un boîtier (6) et, contenu à l'intérieur, un dispositif de mesure, séparé du boîtier par un interstice radial, constitué d'un élément de transmission de pression (2), d'un élément de mesure (4) et, le cas échéant, d'un tube élastique pour assurer la précontrainte axiale de l'élément de mesure, ainsi qu'une membrane d'étanchéité (3), reliant côté milieu, de façon étanche et avec une souplesse en flexion, le boîtier et l'élément de transmission de pression,
caractérisé en ce qu'entre l'élément de transmission de pression (2) et le boîtier (6) est disposé au moins un élément de conduction thermique (7), fabriqué à partir d'un matériau bon conducteur de la chaleur et présentant une grande aire de section transversale de conduction thermique, de manière que la quantité de chaleur produite dans la zone de l'élément de transmission de pression (2) soit pour la plus grande part susceptible d'être évacuée du boîtier (6) par l'intermédiaire de l'élément de conduction thermique (7), l'élément de conduction thermique (7), en cas de déplacements axiaux entre l'élément de transmission de pression (2) et le boîtier (6), agit à la façon d'un élément à flexion ou d'un élément à roulement, réalisé avec souplesse en direction axiale, eu égard à la transmission des efforts.

2. Capteur de pression selon la revendication 1,
caractérisé en ce qu'
en plus de l'élément de conduction thermique (7) présentant une souplesse en direction axiale est prévu un autre élément de conduction thermique (8) rigide, de préférence simple, qui assure la conduction thermique dans les zones de boîtier (6) plus froides, plus éloignées de l'élément de transmission de pression (2).

3. Capteur de pression selon la revendication 1,
caractérisé en ce que
l'élément de conduction thermique (7) présentant une souplesse en direction axiale est élargi autour d'une partie (8') également bonne conductrice de la chaleur et rigide, qui assure la conduction thermique dans les zones de boîtier plus froides, plus éloignées de l'élément de transmission de pression (2).

4. Capteur de pression selon la revendication 1 ou 2,
caractérisé en ce que
l'élément de conduction thermique (7) est réalisé de manière à être déformable une fois monté, les efforts de déformation se produisant génère au moins en partie les efforts de précontrainte nécessaires à l'élément de mesure (4).

5. Capteur de pression selon la revendication 1,
caractérisé en ce que
l'élément de conduction thermique (7) est constitué de deux membranes (11) disposées entre l'élément de transmission de pression (2) et le boîtier (6), constituant un espace creux (13) fermé, rempli d'un liquide conducteur de la chaleur.
